# EUROPEAN PATENT APPLICATION

(11) **EP 1 471 101 A1**
(43) Date of publication of application: **27.10.2004**
(21) Application number: 04004957.9
(22) Date of filing: 03.03.2004
(51) Int. Cl.: C08J 9/14, C08L 75/04

(54) **Polymer foam having improved fire performance**

(30) Priority: 25.03.2003 US 396749
(71) Applicant: Atofina Chemicals, Inc., Philadelphia, PA 19103-3222 (US)
(72) Inventor: Gensous, Francis, 64230 Lescar (FR); Bertelo, Christopher, Doylestown Pennsylvania 18901 (US)
(74) Representative: Dang, Doris

(57) **Abstract**

A method for producing polymer foams having improved fire performance properties is provided, which method comprises using 365mfc as the blowing agent, as well as polyurethane foam compositions comprising a polyol, an isocyanate and 365mfc.

## Description

This invention relates to polymer foams having improved fire performance, that is, to polymer foams which, upon ignition, exhibit reduced smoke development and reduced mass loss rate (an indication of the rate of heat release), especially to methods for producing hydrofluorocarbon ("HFC") blown, closed cell polymer (insulation) foams, such as polystyrene, phenolic and polyurethane foams, having improved fire performance properties in contrast to foams blown with known HFC blowing agents such as
1,1,1,3,3-pentafluoropropane ("245fa"), the improvement resulting from the use of a foam blowing agent comprising 1,1,1,3,3-pentafluorobutane ("365mfc").

HFC-245fa is non-flammable, while literature reports that HFC-365mfc has a flash point of -25°C and a flammability range of 3.8 to 13.3. Thus, it has been assumed that polymer foams made from 245fa would likewise exhibit improved fire performance properties. Thus, it is not surprising that U.S. Patent 5,496,866, which discloses many C3 to C5 HFC blowing agents, does not list HFC-365mfc as a preferred blowing agent or use it in any of the examples. However, as the foam industry is being forced by the Montreal Protocols to phase out the use of such preferred blowing agents as the hydrochlorofluoro-carbon ("HCFC"), 1,1-dichloro-1-fluoroethane, the industry is beginning to turn to HFCs as an alternative blowing agent because they have zero ozone depletion potential ("ODP"). It is therefore important to find an HFC blowing agent which will produce polymer foams exhibiting good fire performance properties.

A method for producing polymer foam, especially polyurethane foam, having improved fire performance properties is provided, which method comprises using as the blowing agent from about 0.5 to about 25 weight %, preferably 1.5 to 18%, based on the weight of the foam, of 365mfc, as well as polyurethane foam compositions comprising a polyol, an isocyanate and from about 0.5 to about 25 weight %, preferably 1.5 to 18%, based on the weight of the composition, of 365mfc.

It has now been surprisingly found that polymer foams made with 0.5-25 weight % of 365mfc exhibit improved fire performance relative to foams made with 245fa. The preferred polyurethane foams can be made by conventional techniques, such as handmix, high pressure impingement, low pressure mechanical mixing, spray and the like. Auxiliary blowing agents may also be present, such as water, hydrocarbons, HCFCs, hydrochlorocarbons or other HFCs.

The blowing agent can be distributed between the "A" and "B" sides of the foam composition. All or a portion of it can also be added at the time of injection or mixing as a third stream.

The other components of the premix and foam formulations may be those which are conventionally used, which components and their proportions are well known to those skilled in the art. For example, fire retardants, surfactants and polyols are typical components of the B-side, while the A-side is primarily comprised of polyisocyanate. The A and B sides are typically mixed together, followed by injection of the catalyst, after which the mixture is poured into a mold or box.

The practice of the invention is illustrated in more detail in the following nonlimiting examples. The formulations used (all having an Iso Index of 275) each contained 156.3 parts D-44V70, a polymeric methane diphenyl diisocyanate (polymeric MDI) available from Bayer Corporation; 100 parts PS2412, a polyester polyol having a hydroxyl number of 230-250 available from the Stepan Company; 0.17 part PC-5, which is pentamethyldiethylenetriamine, a catalyst available from Air Products; 2.71 parts K-15, potassium octoate in dipropylene glycol, a catalyst available from Air Products; 2 parts B-8465, a polysiloxane-polyether copolymer surfactant available from Goldschmidt Chemical Corporation; and about 39-44 parts blowing agent (43.51 parts in the case of the blowing agent of this invention, 365mfc, and 39.40 parts blowing agent in the case of the prior art blowing agent, 245fa); all parts are by weight.

The A-side (D-44V70) and B-side (a mixture of the polyol, surfactant and blowing agent) were each cooled to 10°C, then mixed, after which the catalyst mixture was injected. After further mixing for about 15-18 seconds, the mixture was poured into a box. The fire behavior of the foams was tested with a cone calorimeter, according to standard test protocols (ISO 5660 or ASTM E 1354). In this test the foam specimens are ignited with a conical radiant heater, the thermal flux applied on the specimen surface being 50 kilowatts per square meter. The specimens tested had a size of 100 mm by 100 mm with a thickness of 50 mm; they were wrapped in aluminum foil in order to have only the upper surface exposed to the radiant heater. Two specimens were used for each measurement and the results were averaged. The total smoke development in 580 seconds (reported according to ASTM E 1354 as the specific extinction area in square meters per kilogram) for foam made with the prior art's 245fa was 852 versus only 621 for foam made with 365mfc. An even greater difference was noted for the mass loss rate (an indication of the rate of heat release), when calculated between 10 to 90% of weight loss, the foam made with the prior art's 245fa having a mass loss rate of 10 grams per second per square meter versus a mass loss rate of only 4 grams per second per square meter for foam made with 365mfc.

## Claims

1. A method for producing polymer foam having improved fire performance properties which comprises using as the blowing agent from about 0.5 to about 25 weight %, based on the weight of the foam, of 1,1,1,3,3-pentafluorobutane.

2. A polymer foam produced by the method of Claim 1.

3. A method for producing polyurethane foam having improved fire performance properties which comprises using as the blowing agent from about 0.5 to about 25 weight %, based on the weight of the foam, of 1,1,1,3,3-pentafluorobutane.

4. A polyurethane foam produced by the method of Claim 3.

5. A polyurethane foam composition comprising an isocyanate, a polyol and from about 0.5 to about 25 weight %, based on the total weight of the composition, of 1,1,1,3,3-pentafluorobutane.
